# FASCICULE DE BREVET EUROPEEN

(11) **EP 3 341 292 B1**
(45) Date de publication et mention de la délivrance du brevet: **05.12.2018**
(21) Numéro de dépôt: 16767325.0
(22) Date de dépôt: 24.08.2016
(51) Int. Cl.: B64D 29/06

(54) **DISPOSITIF D'ALIMENTATION POUR UN SYSTÈME D'ACTIONNEMENT ÉLECTRIQUE**
ENERGIEVERSORGUNGSVORRICHTUNG FÜR EIN ELEKTRISCH BETRIEBENES SYSTEM
POWER SUPPLY DEVICE FOR AN ELECTRIC ACTUATION SYSTEM

(30) Priorité: 24.08.2015 FR 1557886
(43) Date de publication de la demande: 04.07.2018
(73) Titulaire: Safran Nacelles, 76700 Gonfreville-l'Orcher (FR)
(72) Inventeur: GONIDEC, Patrick, 76700 Gonfreville L'Orcher (FR); MAALIOUNE, Hakim, 78630 Orgeval (FR)
(74) Mandataire: Verriest, Philippe
(86) Numéro de dépôt international: PCT/FR2016/052114
(87) Numéro de publication internationale: WO 2017/032950

(56) Documents cités:
- EP-A1- 2 562 888
- WO-A2-2005/026518
- US-A1- 2013 312 387

## Description

La présente invention se rapporte à une nacelle pour un turboréacteur d'aéronef double flux.

Un aéronef est mu par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un système mécanique d'actionnement d'inverseur de poussée.

Une nacelle présente généralement une structure tubulaire suivant un axe longitudinal comprenant une entrée d'air en amont du turboréacteur, une section médiane destinée à entourer une soufflante du turboréacteur, une section aval abritant des moyens d'inversion de poussée et destinée à entourer la chambre de combustion du turboréacteur. La structure tubulaire est généralement terminée par une tuyère d'éjection dont la sortie est située en aval du turboréacteur.

Les nacelles modernes sont destinées à abriter un turboréacteur double flux apte à générer par l'intermédiaire des pales de la soufflante en rotation un flux d'air chaud (également appelé « flux primaire ») issu de la chambre de combustion du turboréacteur, et un flux d'air froid (« flux secondaire ») qui circule à l'extérieur du turboréacteur à travers un passage annulaire, également appelé « veine secondaire».

On entend ici par le terme « aval » la direction correspondant au sens du flux d'air froid pénétrant dans le turboréacteur. Le terme « amont » désigne la direction opposée.

Ladite veine secondaire est formée par une structure externe, dite Outer Fixed Structure (OFS) et une structure interne concentrique, dite Inner Fixed Structure (IFS), entourant la structure du moteur proprement dite à l'aval de la soufflante. Les structures interne et externe appartiennent à la section aval. La structure externe (OFS) peut comporter un ou plusieurs capots coulissants suivant l'axe longitudinal de la nacelle entre une position permettant l'échappement du flux d'air inversé et une position empêchant un tel échappement.

Par ailleurs, outre sa fonction d'inversion de poussée, le capot coulissant appartient à la section arrière et présente un côté aval formant la tuyère d'éjection visant à canaliser l'éjection du flux d'air froid, désigné ci-après par «flux d'air principal » ou « flux d'air secondaire ». Cette tuyère fournit la puissance nécessaire pour la propulsion en imprimant une vitesse aux flux d'éjection. Cette tuyère est associée à un système d'actionnement indépendant ou non de celui du capot permettant de faire varier et d'optimiser sa section en fonction de la phase de vol dans laquelle se trouve l'aéronef.

Il peut s'avérer avantageux de diminuer la section d'entrée ou d'éjection du flux d'air principal dans l'espace formé par l'entrée d'air et la veine annulaire.

Par exemple on peut diminuer la section d'éjection du flux d'air principal au niveau de la sortie de la veine annulaire par l'intermédiaire d'une tuyère variable (en anglais : « Variable Fan Nozzle » - VFN) formée par des panneaux mobiles portés directement par le capot mobile d'inverseur de poussée.

Une telle tuyère variable permet de moduler la poussée en faisant varier sa section de sortie en réponse à des variations du réglage de la puissance du turboréacteur et des conditions de vol.

Comme décrit précédemment, la structure externe peut comporter un ou plusieurs capots coulissants suivant l'axe longitudinal de la nacelle entre une première position et une deuxième position permettant l'échappement du flux d'air inversé. Lors du coulissement des capots, une source d'énergie est reliée à un système d'actionnement permettant d'actionner la tuyère variable soit par un système à friction, de type caténaire dont les décharges électrostatiques peuvent causer de forts champs électromagnétiques pouvant perturber le bon fonctionnement de certains composants électrique, soit du type chaine à câbles qui montrent un déficit important de fiabilité. Le document US2013/0312387 décrit une nacelle pour un turboréacteur d'aéronef comprenant une source d'énergie et un consommateur reliés avec des connecteurs inductifs.

L'objet de l'invention est de pouvoir alimenter électriquement des pièces mobiles l'une par rapport à l'autre, en particulier pour alimenter électriquement un organe consommateur d'énergie électrique, par exemple un moteur électrique porté par un capot mobile d'inverseur de poussée avec une source d'énergie électrique située sur une partie fixe de nacelle (OFS) tout en permettant l'expansion des capots sans rupture du circuit d'alimentation et sans contact entre les conducteurs comme c'est le cas avec des caténaires.

La présente invention a pour but de résoudre tout ou partie des inconvénients mentionnés ci-dessus sous la forme d'une nacelle pour un turboréacteur d'aéronef dont la nacelle comprend un dispositif d'alimentation électrique présentant une source d'énergie porté par une structure fixe de la nacelle et fournissant son énergie à un organe consommateur d'énergie électrique porté par un capot mobile d'un inverseur de poussée ; l'organe consommateur d'énergie électrique comprenant un ensemble de noeuds bivalents configuré pour permettre à l'organe consommateur d'énergie électrique de transformer totalement ou partiellement l'énergie électrique alternatif en une énergie mécanique ; le dispositif comprenant en outre au moins un ensemble de dispositifs de transfert d'énergie configuré pour connecter une source d'énergie électrique à l'organe consommateur d'énergie électrique et étant destiné à transférer totalement ou partiellement l'énergie électrique vers l'organe consommateur d'énergie électrique ; l'ensemble de dispositifs de transfert d'énergie comprend un premier conducteur électrique configuré pour être relié électriquement à la source d'énergie et un deuxième conducteur électrique configuré pour être relié électriquement à l'organe consommateur d'énergie électrique ; le premier conducteur électrique comprend un premier tube cylindrique solidaire du capot mobile et le deuxième conducteur comprend un deuxième tube cylindrique solidaire de la structure fixe de l'inverseur et le premier conducteur électrique et le deuxième conducteur électrique sont configurés pour former au moins un composant électrique parmi un composant électrique capacitif et un composant électrique inductif et pour être isolés électriquement l'un par rapport à l'autre à l'arrêt ou lors du déplacement du capot mobile par rapport à la structure fixe.

Grâce aux dispositions selon l'invention, le dispositif d'alimentation permet d'alimenter en puissance électrique le système d'actionnement électrique et le premier conducteur électrique et le deuxième conducteur ont une position bien défini.

Le dispositif d'alimentation peut en outre présenter une ou plusieurs des caractéristiques suivantes, prises seules ou en combinaison.

Selon un mode de réalisation, le composant électrique est configuré pour isolés électriquement en courant continu l'un par rapport à l'autre à l'arrêt ou lors du déplacement du capot mobile par rapport à la structure fixe.

Ainsi, grâce à cette disposition, le dispositif d'alimentation permet d'alimenter en puissance électrique le système d'actionnement électrique.

Selon un mode de réalisation, l'organe consommateur d'énergie électrique appartient à un système d'actionnement de tuyère variable du capot mobile de l'inverseur de poussée, de préférence l'organe consommateur d'énergie électrique forme un moteur de ce système d'actionnement.

Ainsi, grâce à cette disposition, la tuyère variable du capot mobile de l'inverseur de poussée peut être actionnée.

Selon un mode de réalisation, le premier tube cylindrique et le deuxième tube cylindrique sont configurés pour coopérer et de préférence le premier tube cylindrique et le deuxième tube cylindrique sont configurés pour coulisser l'un par rapport à l'autre et se trouvent en vis-à-vis l'un de l'autre au moins quand le capot coulissant de la nacelle est fermé pour ainsi constituer un condensateur d'isolement ou un transformateur d'isolement.

Ainsi, grâce à cette disposition, le premier tube cylindrique et le deuxième tube cylindrique forme un condensateur.

Selon un mode de réalisation, le premier conducteur est relié électriquement au premier tube cylindrique, de préférence le premier conducteur électrique contacte électriquement l'une des extrémités du premier tube cylindrique. Ainsi, grâce à cette disposition, une accumulation de charge peut se réaliser sur la surface du premier tube cylindrique.

Selon un mode de réalisation, le deuxième conducteur est relié électriquement au deuxième tube cylindrique, de préférence le deuxième conducteur électrique contacte électriquement l'une des extrémités du deuxième tube cylindrique.

Ainsi, grâce à cette disposition, une accumulation de charge peut se réaliser sur la surface du premier tube cylindrique.

Selon un mode de réalisation, le dispositif d'alimentation électrique comprend un premier dispositif de transfert d'énergie capacitif et un deuxième dispositif de transfert d'énergie capacitif; le premier dispositif de transfert d'énergie capacitif étant relié électriquement à la source d'énergie électrique par l'intermédiaire du premier conducteur électrique et à l'organe consommateur d'énergie électrique par l'intermédiaire du deuxième conducteur électrique ; le deuxième dispositif de transfert d'énergie capacitif étant relié électriquement à l'organe consommateur d'énergie électrique par l'intermédiaire du premier conducteur électrique et à la source d'énergie électrique par l'intermédiaire du deuxième conducteur électrique.

Ainsi, grâce à cette disposition, l'organe consommateur d'énergie électrique peut être alimenté en énergie électrique dans une des positions de la nacelle.

Selon un mode de réalisation, le dispositif d'alimentation électrique comprend un premier dispositif de transfert d'énergie inductif et un deuxième dispositif de transfert d'énergie inductif; le premier dispositif de transfert d'énergie inductif est relié électriquement à la source d'énergie électrique par l'intermédiaire du premier conducteur électrique et à l'organe consommateur d'énergie électrique par l'intermédiaire du deuxième conducteur électrique ; le deuxième dispositif de transfert d'énergie inductif est relié électriquement à l'organe consommateur d'énergie électrique par l'intermédiaire du premier conducteur électrique et à la source d'énergie électrique par l'intermédiaire du deuxième conducteur électrique.

Ainsi, grâce à cette disposition, l'organe consommateur d'énergie électrique peut être alimenté en énergie électrique dans une des positions de la nacelle.

Selon un mode de réalisation, le premier tube cylindrique comprend au moins une surface interne primaire et au moins une surface externe primaire et le deuxième tube cylindrique comprend au moins une surface interne secondaire et au moins une surface externe secondaire, dans laquelle un des tubes cylindriques parmi le premier tube cylindrique et le deuxième tube cylindrique comprend une couche d'isolant électrique sur au moins une surface parmi la surface interne primaire, la surface externe primaire, la surface interne secondaire et la surface externe secondaire.

Ainsi, grâce à cette disposition, le transfert d'énergie nécessaire à l'organe consommateur d'énergie peut se réaliser sans contact électrique.

Selon un mode de réalisation, la capacité du circuit de connexion est compensée par une induction électrique supplémentaire.

Ainsi, grâce à cette disposition, la capacité du circuit est compensée.

Selon un mode de réalisation, l'induction du circuit de connexion est compensée par une capacité électrique supplémentaire.

Ainsi, grâce à cette disposition, l'inductance du circuit est compensée.

Selon un mode de réalisation, un composant capacitif est inséré dans le circuit pour diminuer la réactance du circuit.

Ainsi, grâce à cette disposition, la réactance du circuit est diminuée.

Selon un mode de réalisation, le premier tube cylindrique s'étend au moins en partie dans le deuxième tube cylindrique.

Ainsi, grâce à cette disposition, le premier tube cylindrique peut coulisser avec le deuxième tube cylindrique.

Selon un mode de réalisation, le deuxième tube cylindrique s'étend au moins en partie dans le premier tube cylindrique.

Ainsi, grâce à cette disposition, le deuxième tube cylindrique peut coulisser avec le premier tube cylindrique.

Selon un mode de réalisation, les tubes cylindriques primaires gigognes et les tubes cylindriques secondaires gigognes sont configurés pour coulisser l'un par rapport à l'autre et de préférence l'un dans l'autre.

Ainsi, grâce à cette disposition, la surface des tubes cylindriques est augmentée.

Selon un mode de réalisation, le dispositif de transfert d'énergie capacitif est un condensateur.

Ainsi, grâce à cette disposition, le transfert d'énergie est transmis sans contact.

Selon un mode de réalisation, la source d'énergie électrique et le premier conducteur électrique du premier dispositif de transfert d'énergie capacitif sont solidaires de la structure fixe et le moteur tout comme le deuxième conducteur électrique du premier dispositif de transfert d'énergie capacitif sont solidaires du capot mobile.

Ainsi, grâce à cette disposition, le circuit peut se séparer et se réassembler.

Selon un mode de réalisation, le premier tube cylindrique est configuré pour présenter totalement ou partiellement l'une de ses surfaces parmi la première surface interne et la première surface externe en vis-à-vis avec l'une des surfaces du deuxième tube cylindrique parmi la deuxième surface interne et la deuxième surface externe.

Ainsi, grâce à cette disposition, le premier tube cylindrique et le deuxième tube cylindrique forme un condensateur.

Selon un mode de réalisation, la source d'énergie électrique et le deuxième conducteur électrique du deuxième dispositif de transfert d'énergie capacitif sont solidaires de la structure fixe et le moteur tout comme le premier conducteur électrique du deuxième dispositif de transfert d'énergie capacitif sont solidaires du capot mobile.

Ainsi, grâce à cette disposition, le circuit peut se séparer et se réassembler.

Selon un mode de réalisation, le dispositif d'alimentation électrique comprend une inductance, configurée pour rééquilibrer la réactance du circuit, soit sur la structure fixe soit sur le capot mobile.

Ainsi, grâce à cette disposition, la réactance du circuit soit sur la structure fixe soit sur le capot mobile.

Selon un mode de réalisation, le premier conducteur électrique comprend un premier solénoïde solidaire du capot mobile et le deuxième conducteur comprend un deuxième solénoïde solidaire de la structure fixe de l'inverseur.

Ainsi, grâce à cette disposition, le premier solénoïde et le deuxième solénoïde ont une position fixe.

Selon un mode de réalisation, le premier conducteur est relié électriquement au premier solénoïde, de préférence le premier conducteur électrique contacte électriquement les deux extrémités du premier solénoïde.

Ainsi, grâce à cette disposition, le courant peut circuler dans le solénoide.

Selon un mode de réalisation, le deuxième conducteur est relié électriquement au deuxième solénoïde, de préférence le deuxième conducteur électrique contacte électriquement les deux extrémités du deuxième solénoïde.

Ainsi, grâce à cette disposition, le courant peut circuler dans le solénoide.

Selon un mode de réalisation, le premier solénoïde s'étend au moins en partie dans le deuxième solénoïde.

Ainsi, grâce à cette disposition, le champ magnétique est transféré en totalité ou en partie d'un solénoïde vers l'autre.

Selon un mode de réalisation, le deuxième solénoïde s'étend au moins en partie dans le premier solénoïde.

Ainsi, grâce à cette disposition, le champ magnétique est transféré en totalité ou en partie d'un solénoïde vers l'autre.

Selon un mode de réalisation, le premier solénoïde comprend au moins une surface interne primaire et au moins une surface externe primaire.

Ainsi, grâce à cette disposition, le champ magnétique est transféré en totalité ou en partie d'un solénoïde vers l'autre.

Selon un mode de réalisation, le deuxième solénoïde comprend au moins une surface interne primaire et au moins une surface externe secondaire.

Ainsi, grâce à cette disposition, le champ magnétique est transféré en totalité ou en partie d'un solénoïde vers l'autre.

Selon un mode de réalisation, un des solénoïdes parmi le premier solénoïde et le deuxième solénoïde comprend une couche d'isolant électrique sur au moins une surface parmi la surface interne primaire, la surface externe primaire, la surface interne secondaire et la surface externe secondaire.

Ainsi, grâce à cette disposition, le champ magnétique est transféré en totalité ou en partie d'un solénoïde vers l'autre sans contact électrique entre les deux solénoïdes.

Selon un mode de réalisation, le premier solénoïde et le deuxième solénoïde sont configurés pour coulisser l'un par rapport à l'autre.

Ainsi, grâce à cette disposition, les solénoïdes peuvent se déplacer l'un par rapport à l'autre lors du déplacement de partie de la nacelle.

Selon un mode de réalisation, le dispositif de transfert d'énergie inductif est un solénoïde.

Ainsi, grâce à cette disposition, le transfert d'énergie peut être réalisé par induction.

Selon un mode de réalisation, le premier conducteur électrique et le deuxième conducteur électrique sont configurés pour former un dispositif de transfert d'énergie inductif.

Ainsi, grâce à cette disposition, le transfert d'énergie est réalisé par induction.

Selon un mode de réalisation, la source d'énergie électrique et le premier conducteur électrique du premier dispositif de transfert d'énergie inductif sont solidaire de la structure fixe et le moteur tout comme le deuxième conducteur électrique du premier dispositif de transfert d'énergie inductif sont solidaires du capot mobile.

Ainsi, grâce à cette disposition, l'organe consommateur d'énergie électrique peut être alimenté en énergie électrique dans une des positions de la nacelle

Selon un mode de réalisation, la source d'énergie électrique et le deuxième conducteur électrique du deuxième dispositif de transfert d'énergie inductif sont solidaire de la structure fixe et le moteur tout comme le premier conducteur électrique du deuxième dispositif de transfert d'énergie inductif sont solidaires du capot mobile.

Ainsi, grâce à cette disposition, les positions du deuxième dispositif de transfert d'énergie inductif et du premier dispositif de transfert d'énergie inductif sont fixe l'une rapport à l'autre.

Selon un mode de réalisation, le dispositif d'alimentation électrique comprend une capacité, configurée pour rééquilibrer la réactance du circuit, soit sur la structure fixe soit sur le capot mobile.

Ainsi, grâce à cette disposition, la réactance du circuit est rééquilibrer.

D'autres caractéristiques et avantages de l'invention apparaîtront mieux à la lecture de la description qui suit d'un mode de réalisation de l'invention donné à titre d'exemple non limitatif.

L'invention sera mieux comprise à l'aide de la description détaillée qui est exposée ci-dessous en regard du dessin, dans lesquels :
- la figure 1 représente un exemple de nacelle dans lequel le le dispositif d'alimentation selon l'invention est mis en oeuvre ;
- la figure 2 montre un exemple de dispositifs de transfert d'énergie lorsque la nacelle est en position d'ouverture ;
- la figure 3 illustre un exemple d'ensemble de dispositifs de transfert d'énergie en position de fermeture selon un mode de réalisation ;
- la figure 4 expose un exemple de dispositifs de transfert d'énergie en position d'ouverture selon un mode de réalisation ;

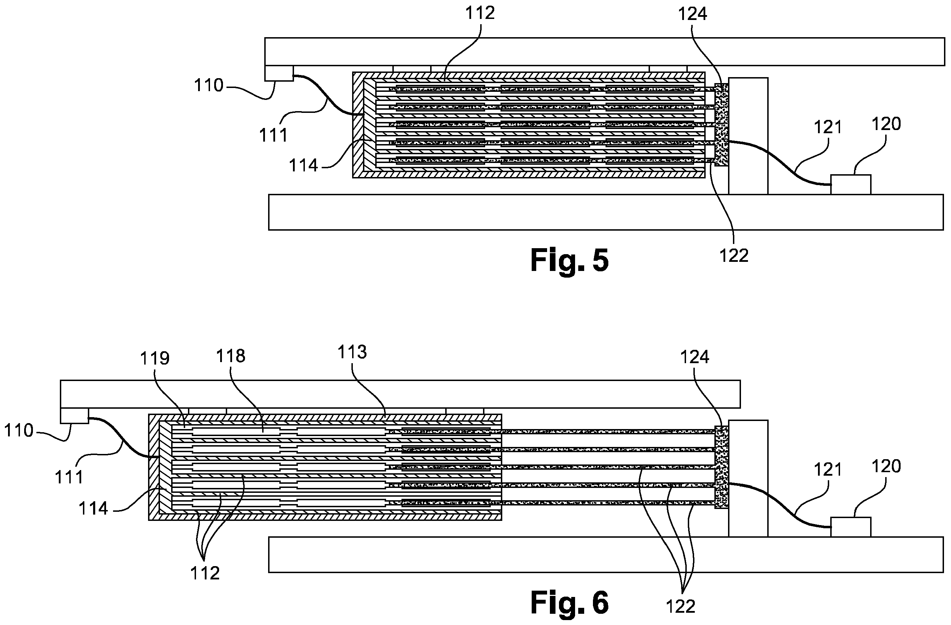

- la figure 5 présente un exemple d'ensemble de dispositifs de transfert d'énergie selon l'invention sous la forme d'un composant électrique capacitif en position de fermeture ;
- la figure 6 représente un exemple d'ensemble de dispositifs de transfert d'énergie selon l'invention sous la forme d'un composant électrique capacitif en position d'ouverture ;
- la figure 7 illustre un exemple de composant électrique capacitif sous forme de peigne ;
- la figure 8 expose un exemple de composant électrique capacitif tubulaire à base rectangulaire selon un mode de réalisation ;
- la figure 9 présente un exemple de composant électrique capacitif tubulaire selon un mode de réalisation ;

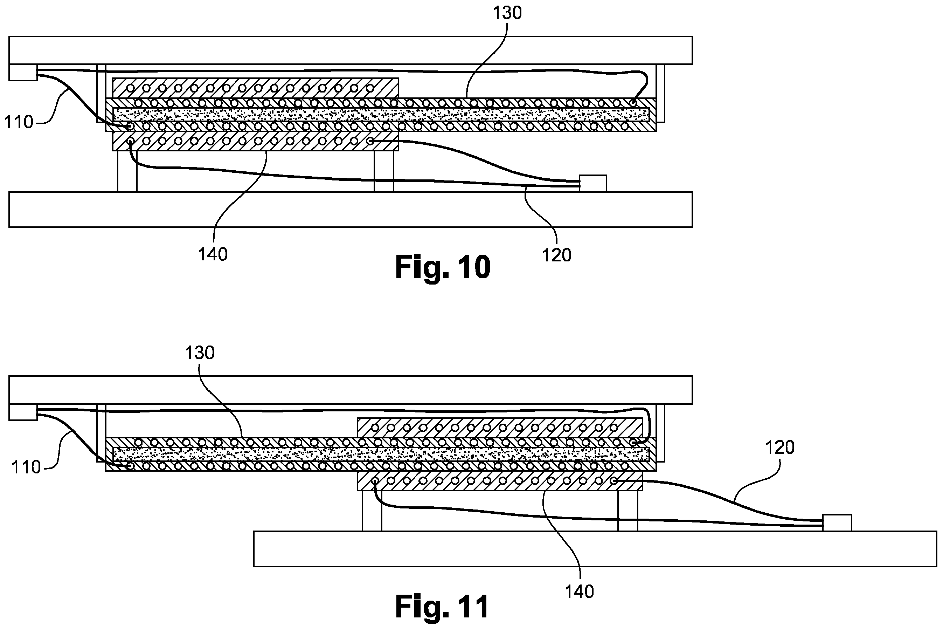

- la figure 10 montre un exemple d'ensemble de dispositifs de transfert d'énergie selon l'invention sous la forme d'un composant électrique inductif en position de fermeture ;
- la figure 11 illustre un exemple d'ensemble de dispositifs de transfert d'énergie selon l'invention sous la forme d'un composant électrique inductif en position de d'ouverture ;
- la figure 12 illustre un exemple de circuit utilisant un ensemble de composant électrique capacitif selon l'invention ; et
- la figure 13 illustre un exemple de circuit utilisant un ensemble de composant électrique inductif selon l'invention.

Dans la description détaillée qui va suivre des figures définies ci-dessus, les mêmes éléments ou les éléments remplissant des fonctions identiques pourront conserver les mêmes références de manière à simplifier la compréhension de l'invention.

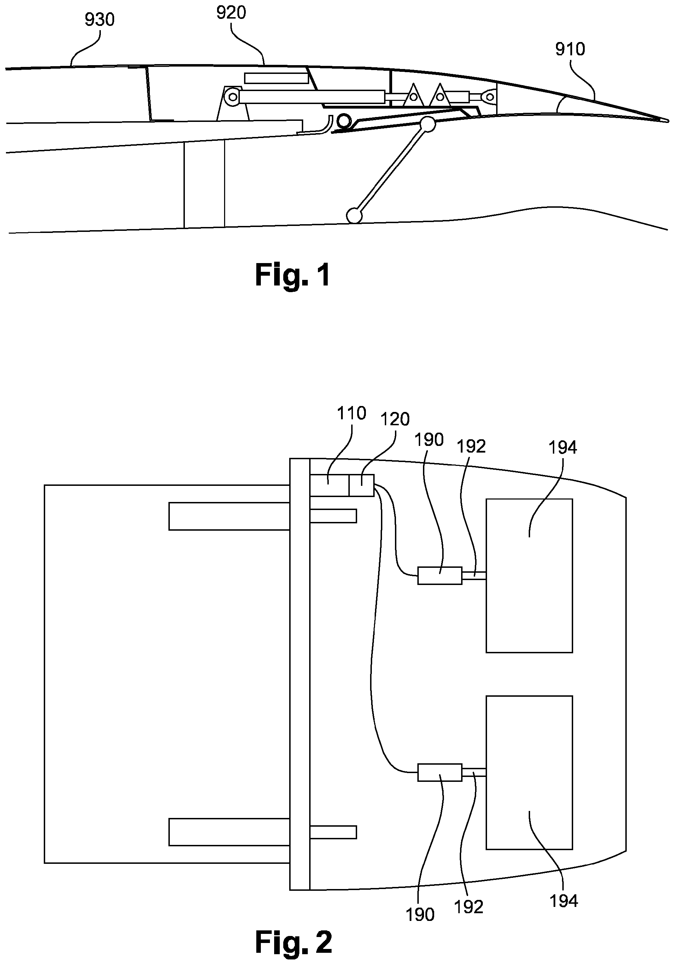

En référence à la figure 1, une nacelle 900 est destinée à constituer une structure tubulaire pour un turboréacteur double flux et sert a canaliser les flux d'air qu'il génère par l'intermédiaire de pales d'une soufflante, à savoir un flux d'air chaud traversant une chambre de combustion et un flux d'air froid circulant a l'extérieur du turboréacteur.

La nacelle 900 possède de façon générale une structure comprenant une section amont 930 formant une entrée d'air, une section médiane 920 entourant la soufflante du turboréacteur et une section aval 910 entourant le turboréacteur.

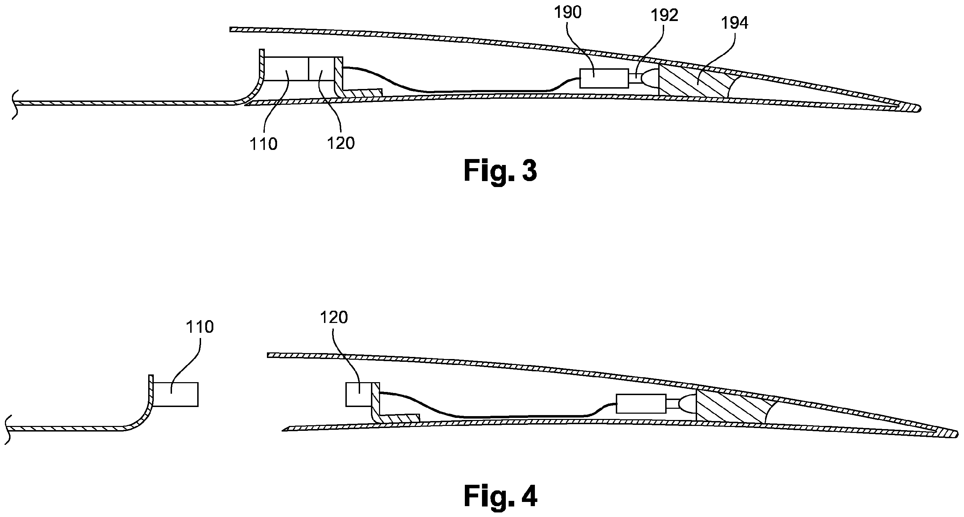

Sur la section amont 930 ou sur la section médiane 920 se trouve une source d'énergie électrique 180 destinée à alimenter un organe consommateur d'énergie électrique 190 par l'intermédiaire d'un ensemble de dispositifs de transfert d'énergie 170 coulissant l'un par rapport à l'autre, plus exactement par un premier conducteur électrique 110 d'un ensemble de dispositifs de transfert d'énergie 170. La section médiane 920, partie fixe de la nacelle 900, est constituée en outre par un capot de soufflante et par un cadre avant comprenant un bord de déviation fixe assurant la ligne aérodynamique avec la partie aval d'un carter de soufflante entourant la soufflante du turboréacteur, lorsque la section médiane 920 et la partie aval sont en première position, c'est-à-dire en position de fermeture comme il est représenté sur la figure 3.

La section aval 910 comprend une structure externe comportant un dispositif d'inversion de poussée, une structure interne de carénage de moteur définissant avec la structure externe une veine destinée à la circulation d'un flux froid dans le cas de la nacelle 900 de turboréacteur double flux, une partie de l'ensemble de dispositifs de transfert d'énergie 170, plus particulièrement un deuxième conducteur électrique 120 et un organe consommateur d'énergie électrique 190 relié électriquement au deuxième conducteur électrique 120. L'organe consommateur d'énergie électrique 190 est configuré pour transformer totalement ou partiellement l'énergie électrique en une énergie mécanique. Cette énergie mécanique permet, en effet, le déplacement d'un organe mobile de déflexion de flux 194, des tuyères d'éjection par exemple, entre une première position parallèle ou sensiblement parallèle à l'écoulement du flux et une deuxième position permettant la déflexion de l'écoulement du flux en faisant varier la section délimitée par les tuyères d'éjection et ainsi influencer les flux. Cette variation de la section délimitée par les tuyères d'éjections se produit dans la plupart des cas, lorsque la section aval 910 recouvre les grilles de déviation, c'est-à-dire lorsque la section aval 910 est en position en première position, en d'autres termes lorsque la section aval 910 en position de fermeture et elle, c'est-à-dire la variation de la section délimitée par les tuyères d'éjection, permet la déflexion de l'écoulement du flux de sorte à modifier le trajet du flux dans une direction et/ou la vitesse du flux.

Dans cette première position, également appelée position de fermeture, l'ensemble de dispositifs de transfert d'énergie 170 forme un circuit fermé, c'est-à-dire un circuit dans lequel le transfert d'énergie peut s'effectuer entre la source d'énergie électrique 180 et l'organe consommateur d'énergie électrique 190.

Afin que ce transfert d'énergie puisse s'effectuer, le premier conducteur électrique 110 comprend un ensemble de surfaces primaires 112 et le deuxième conducteur électrique 120 comprend un ensemble de surfaces secondaire. Selon un premier mode de réalisation, l'ensemble de surfaces primaires 112 et l'ensemble de surfaces secondaires 122 comprennent un matériau conducteur et sont relier respectivement aux premier conducteur électrique 110 et au deuxième conducteur électrique 120 par un organe de jonction, plus exactement un organe de jonction primaire 114 et respectivement un organe de jonction secondaire 124 permettant le passage du courant entre le premier conducteur électrique 110 et l'ensemble de surfaces primaires 112 et il en va de même entre l'ensemble de surfaces secondaires 122 et le deuxième conducteur électrique 120. Ainsi grâce à cette configuration, un contact électrique est établi entre les surfaces, c'est-à-dire entre l'ensemble de surfaces primaires 112 et l'ensemble de surfaces secondaires 122 ou plus exactement le premier conducteur électrique 110 et le deuxième conducteur électrique 120 de sorte que la source d'énergie électrique 180 puisse alimenter l'organe consommateur d'énergie électrique 190.

La section aval 910 comprend des moyens d'inversion de poussée et une structure interne de carénage de moteur définissant avec les moyens d'inversion de poussée une veine destinée à la circulation d'un flux d'air froid du turboréacteur.

La section aval 910 comprend, en outre, un cadre avant, un capot mobile et une section de tuyère d'éjection comme décrit précédemment. Le cadre avant est prolongé par le capot mobile monté coulissant le long de l'axe longitudinal de la nacelle 900. Le cadre avant supporte également une pluralité de grilles de déviation logées dans l'épaisseur du capot mobile, lorsque celui-ci est en première position, c'est-à-dire en position de fermeture.

Lorsque la section aval 910 découvre la pluralité de grilles de déviation afin de permettre aux moyens d'inversion de poussée d'obstruer le passage du flux d'air froid, la section aval 910 se détache de la section médiane 920 de sorte à ouvrir le logement du capot, c'est pourquoi nous parlerons par la suite de deuxième position ou plus exactement de position d'ouverture. Durant cette opération de déflexion de flux, l'ensemble de surfaces primaires 112 et l'ensemble de surfaces secondaires 122 se déplacent les unes par rapport aux autres.

Ce mode de réalisation présente l'avantage d'éviter tout désalignement lorsque l'opération de déflexion de flux sera terminée et que les grilles de déviation seront couvertes.

Selon un autre mode de réalisation, une couche d'isolant 160, par exemple une matière plastique et/ou un polymère non conducteur peut être appliquée sur l'une des surfaces ou sur l'ensemble des surfaces primaires 111 et secondaires 121 de sorte à éviter une décharge électrostatique entre les surfaces.

Bien entendu, afin que le transfert d'énergie puisse s'opérer entre l'ensemble de surfaces primaires 111 et l'ensemble de surfaces secondaires 121, ou plus exactement entre la source d'énergie électrique 180 et l'organe consommateur d'énergie électrique 190, il convient de prévoir une source d'énergie électrique 180 fournissant une tension alternative et/ou un courant alternatif.

Afin que cette énergie électrique puisse être consommée, l'organe consommateur d'énergie électrique 190 comprend un ensemble de noeuds bivalents (non représentés) pouvant, selon le sens du courant et/ou de la tension, être des noeuds d'entrée et/ou de sortie.

En effet, étant donné que l'ensemble de surfaces primaires 112 et/ou de surface secondaire sont couverts d'une couche d'isolant 160, l'ensemble de surfaces primaires 112 et l'ensemble de surfaces secondaires121 forment un composant électrique capacitif.

Selon un autre mode de réalisation, le premier conducteur électrique 110 peut comprendre une première paroi 113 formant un élément tubulaire primaire 115 délimitant un logement primaire 117 et le deuxième conducteur électrique 120 peut comprendre une deuxième paroi 123 formant un élément tubulaire secondaire 125 délimitant un logement secondaire 127.

Ainsi dans ce mode de réalisation, l'élément tubulaire primaire 115, délimité par la surface primaire interne 119, peut loger l'élément tubulaire secondaire 125 dans le logement tubulaire primaire 117 prévu à cet effet. Dès lors, la surface secondaire externe 128, délimitant le logement tubulaire secondaire 127, est en regard de la surface primaire interne 119 de sorte à former un composant électronique capacitif. Selon un mode de réalisation tout à fait similaire, le logement tubulaire secondaire 127 pourrait loger l'élément tubulaire primaire 113.

Dans ces deux variantes exposées ci-dessus, l'élément tubulaire primaire 113 comprend une surface primaire interne 119 et une surface primaire externe 118 reliées électriquement au premier conducteur électrique 110 par un organe de jonction primaire 114 et l'élément tubulaire secondaire 125 comprend une surface secondaire interne 129 et une surface secondaire externe 128 reliées électriquement au deuxième conducteur électrique 120 par un organe de jonction secondaire 124. Ainsi grâce à cette configuration, la première paroi peut être, selon une variante, en matériau composite, afin d'alléger l'élément tubulaire primaire 113 et la surface primaire interne 119 ainsi que la surface primaire externe 118 en matériau conducteur de sorte à former une partie du composant électronique capacitif sachant que l'autre partie est formée par l'élément tubulaire secondaire 125. Il est bien évident que la l'élément tubulaire secondaire 125 comprend les mêmes caractéristique que l'élément tubulaire primaire 113, à savoir une deuxième paroi 123 en matériau composite ainsi qu'une surface secondaire interne 129 et une surface secondaire externe 128 en matériau conducteur. L'ensemble des surfaces internes et externes des parois primaires et secondaires sont recouvertes d'une couche d'isolant 160, de préférence de téflon".

En conséquence, lorsque la section médiane 920 et la section aval 910 se déplace l'une par rapport à l'autre de façon sensiblement parallèle, c'est-à-dire dans un angle compris entre 0° et 10°, les surfaces internes et externes des éléments tubulaire se déplacent sensiblement parallèlement les une par rapport aux autres. Autrement dit, en prenant pour référence l'une des surfaces primaires internes 119, l'une des surfaces secondaires externes 128 se déplace dans un plan parallèle au plan que décrit l'ensemble de surfaces primaires internes 119.

Selon un autre mode de réalisation, le premier conducteur électrique 110 peut comprendre un ensemble d'éléments tubulaires concentriques ou coaxiaux primaire tout comme le deuxième conducteur électrique 120 peut également comprendre un ensemble d'éléments tubulaires concentriques ou coaxiaux secondaire. Par concentrique, on entend un ensemble d'éléments tubulaires dont leurs centres géométriques et/ou de gravités seraient identiques, et par coaxial on entend un ensemble de d'éléments tubulaires dont leurs centres de gravités et/ou géométrique seraient placés sur un même axe.

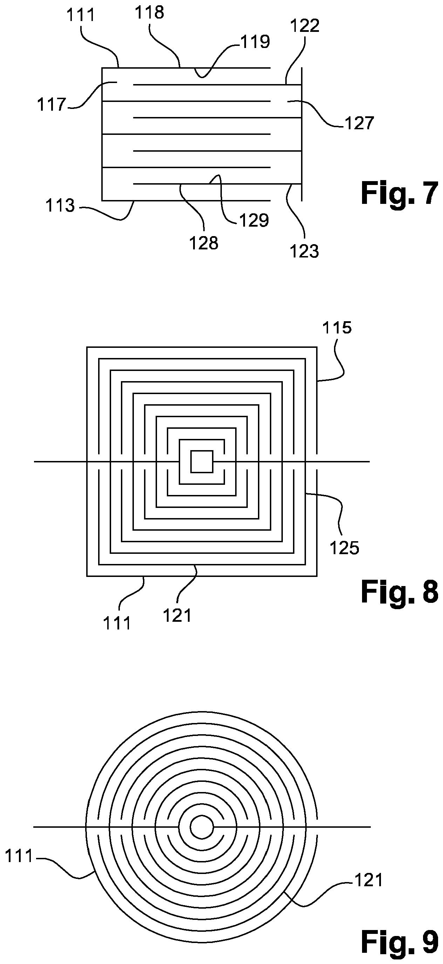

L'ensemble d'éléments tubulaires concentriques primaire forment par l'ensemble de parois concentriques primaires 117 destinés à loger l'ensemble de parois concentriques secondaires 127 de sorte qu'il peut être observé selon une vue en coupe une alternance de parois concentriques primaires et de parois concentriques secondaires, comme il peut être observé sur les figures 7 à 9. Plus exactement, il est possible de discerner une alternance de parois concentriques primaires et de parois concentriques secondaires 123 isolées électriquement par une couche d'isolant 160, de préférence du polytétrafluoroéthylène recouvrant soit la surface primaire 111 soit la surface secondaire 121 soit les deux.

L'avantage du polytétrafluoroéthylène est d'avoir une très bonne tenue à de relativement forte température et de résister à la plupart des produits chimiques. Une caractéristique importante du polytétrafluoroéthylène est son faible coefficient de frottement, ce qui permet à la fois de faciliter l'imbrication de l'ensemble des parois concentriques ou coaxiales primaires dans l'ensemble de logements concentriques ou coaxiales secondaires de sorte à faciliter implicitement la mise en regard de l'ensemble de surfaces primaires 112 internes et/ou externes avec l'ensemble de surfaces secondaires 122 internes et/ou externes.

De plus, il se peut que des poussières viennent gêner l'imbrication et/ou le déplacement des parois dans leurs logements. À cet effet, il est prévu un ensemble de cavités dans la couche d'isolant 160 de sorte que lorsque les parois se déplacent les poussières soient accompagnées jusqu'aux cavités 162 où elles se retrouvent retenues. Il se peut que pour des raisons d'entretien les cavités soient reliées par un canal de sorte à pouvoir laisser les poussières ressortir plus facilement des cavités 162 des logements concentriques quand cela est désiré.

Une alternative au composant électrique capacitif pourrait être un composant électrique inductif. Dans cet autre mode de réalisation, le premier conducteur électrique 110 est configuré pour former un enroulement primaire 130 avec des spires enroulées en forme d'hélice et le deuxième conducteur électrique 120 est configuré pour former un enroulement secondaire 140 avec des spires enroulées en forme d'hélice également. Bien entendu, l'enroulement primaire 130 et/ou secondaire 140 peuvent former un enroulement dont les spires seraient contiguës, un solénoïde ou une bobine et ce selon les besoins.

L'enroulement primaire 130 et/ou secondaire 140, comme écrit précédemment il peut s'agir d'un enroulement dont les spires seraient contiguës, un solénoïde ou une bobine, peut délimiter un logement primaire 117 et respectivement un logement secondaire 127. Ainsi, il est permis à l'enroulement secondaire 140 de se loger dans le logement primaire 117 délimité par l'enroulement primaire 130. Selon un autre mode de réalisation, l'enroulement primaire 130 et/ou secondaire 140 peut être enroulé sur un élément tubulaire primaire 113 et respectivement secondaire 123. Ce mode de réalisation présent l'avantage de délimiter clairement un logement primaire 117 et respectivement un logement secondaire 127 mais aussi, selon la configuration de l'enroulement, un champ magnétique uniforme. Par clairement, on entend un logement régulier dans l'espace.

Il est possible que le logement primaire 117 et/ou secondaire 127 formé par l'enroulement primaire 130 et/ou secondaire 140 soit configuré pour loger un élément en fer doux afin de permettre une bonne conduction du flux magnétique au sein du logement primaire 117 et/ou secondaire 127.

De façon identique à l'un des modes de réalisation décrit précédemment, une couche d'isolant 160 peut recouvrir l'enroulement primaire 130 et/ou l'enroulement secondaire 140 de sorte que lors du transfert d'énergie par induction entre le premier enroulement et le deuxième enroulement aucune décharge électrostatique ne puisse apparaître.

Selon la configuration et le nombre de spires du composant électrique inductif, un dispositif de compensation peut être introduit dans le dispositif d'alimentation. Plus exactement, un dispositif de compensation capacitif 152 peut être introduit dans le dispositif d'alimentation afin de réduire la réactance du circuit, c'est-à-dire de l'ensemble formé par l'ensemble de transfert d'énergie électrique et de l'organe de consommation énergie électrique 190.

De façon similaire, un dispositif de compensation inductif 151 peut être introduit dans le dispositif d'alimentation afin de réduire la réactance du circuit. Par ailleurs afin toujours de minimiser la réactance du circuit, un régulateur de tension 155, c'est-à-dire un onduleur, un hacheur parallèle et/ou série ou une combinaison des trois peut être connectée en série avec le dispositif de transfert d'énergie de sorte à former un circuit fermé et est configurée pour réguler l'énergie électrique lors du transfert entre la source d'énergie et l'organe consommateur d'énergie électrique 190 par l'intermédiaire du dispositif de transfert d'énergie. Ce mode de réalisation possède l'avantage de pouvoir optimiser le transfert d'énergie. En effet, la fréquence régulée par le régulateur de tension permet de minimiser la réactance du circuit, en d'autres termes, lorsque le circuit est en résonance.

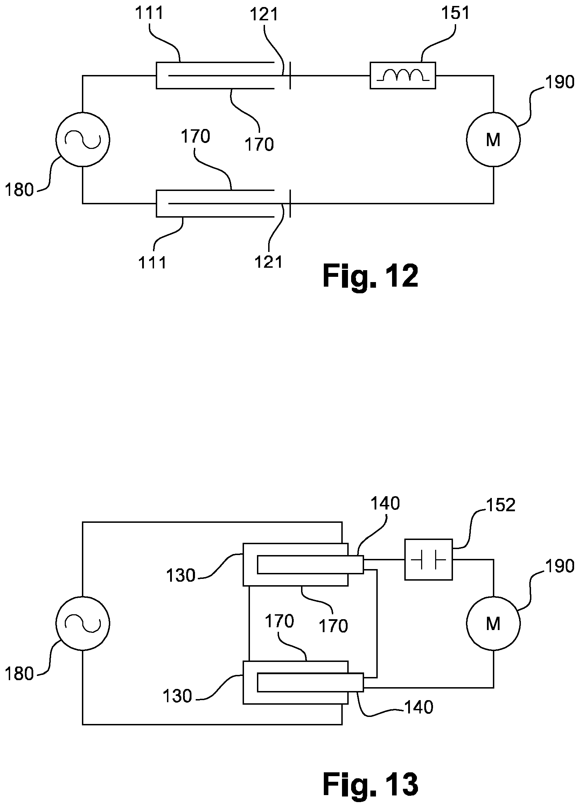

Comme illustré sur la figure 12, le circuit peut comprend une source d'énergie, un composant électrique capacitif, un dispositif de compensation inductif 151 afin de compenser la réactance du circuit et un organe consommateur d'énergie.

Sur la figure 13, il peut être observé un autre mode de réalisation comprenant une source d'énergie, un composant électrique inductif, dispositif de compensation capacitif 152 afin de compenser la réactance du circuit et un organe consommateur d'énergie.

## Revendications

1. Nacelle (900) pour un turboréacteur d'aéronef dont la nacelle (900) comprend un dispositif d'alimentation électrique présentant une source d'énergie (180) porté par une structure fixe de la nacelle (900) et fournissant son énergie à un organe consommateur d'énergie électrique (190) porté par un capot mobile d'un inverseur de poussée ; l'organe consommateur d'énergie électrique (190) comprenant un ensemble de noeuds bivalents configuré pour permettre à l'organe consommateur d'énergie électrique (190) de transformer totalement ou partiellement l'énergie électrique alternatif en une énergie mécanique ; le dispositif d'alimentation électrique comprenant en outre au moins un ensemble de dispositifs de transfert d'énergie (170) configuré pour connecter une source d'énergie électrique (180) à l'organe consommateur d'énergie électrique (190) et étant destiné à transférer totalement ou partiellement l'énergie électrique vers l'organe consommateur d'énergie électrique (190) ; l'ensemble de dispositifs de transfert d'énergie (170) comprenant un premier conducteur électrique (110) configuré pour être relié électriquement à la source d'énergie et un deuxième conducteur électrique (120) configuré pour être relié électriquement à l'organe consommateur d'énergie électrique (190) ; le premier conducteur électrique (110) comprenant un premier tube cylindrique solidaire du capot mobile et le deuxième conducteur comprenant un deuxième tube cylindrique solidaire de la structure fixe de l'inverseur et le premier conducteur électrique (110) et le deuxième conducteur électrique (120) sont configurés pour former au moins un composant électrique parmi un composant électrique capacitif et/ou un composant électrique inductif et pour être isolés électriquement l'un par rapport à l'autre à l'arrêt ou lors du déplacement du capot mobile par rapport à la structure fixe.

2. Nacelle (900) selon la revendication 1, dans laquelle l'organe consommateur d'énergie électrique (190) appartient à un système d'actionnement de tuyère variable du capot mobile de l'inverseur de poussée, de préférence l'organe consommateur d'énergie électrique (190) forme un moteur de ce système d'actionnement.

3. Nacelle (900) selon la revendication 1, dans laquelle le premier tube cylindrique et le deuxième tube cylindrique sont configurés pour coopérer et de préférence le premier tube cylindrique et le deuxième tube cylindrique sont configurés pour coulisser l'un par rapport à l'autre et se trouvent en vis-à-vis l'un de l'autre au moins quand le capot coulissant de la nacelle (900) est fermé pour ainsi constituer un condensateur d'isolement ou un transformateur d'isolement.

4. Nacelle (900) selon l'une des revendications 1 ou 3, dans laquelle le premier conducteur est relié électriquement au premier tube cylindrique, de préférence le premier conducteur électrique (110) contacte électriquement l'une des extrémités du premier tube cylindrique.

5. Nacelle (900) selon l'une des revendications 1 ou 3, dans laquelle le deuxième conducteur est relié électriquement au deuxième tube cylindrique, de préférence le deuxième conducteur électrique (120) contacte électriquement l'une des extrémités du deuxième tube cylindrique.

6. Nacelle (900) selon l'une quelconque des revendications précédentes, dans laquelle le dispositif d'alimentation électrique comprend un premier dispositif de transfert d'énergie capacitif et un deuxième dispositif de transfert d'énergie capacitif ; le premier dispositif de transfert d'énergie capacitif étant relié électriquement à la source d'énergie électrique (180) par l'intermédiaire du premier conducteur électrique (110) et à l'organe consommateur d'énergie électrique (190) par l'intermédiaire du deuxième conducteur électrique (120) ; le deuxième dispositif de transfert d'énergie capacitif étant relié électriquement à l'organe consommateur d'énergie électrique (190) par l'intermédiaire du premier conducteur électrique (110) et à la source d'énergie électrique (180) par l'intermédiaire du deuxième conducteur électrique (120).

7. Nacelle (900) selon l'une quelconque des revendications précédentes, dans laquelle le dispositif d'alimentation électrique comprend un premier dispositif de transfert d'énergie inductif et un deuxième dispositif de transfert d'énergie inductif; le premier dispositif de transfert d'énergie inductif est relié électriquement à la source d'énergie électrique (180) par l'intermédiaire du premier conducteur électrique (110) et à l'organe consommateur d'énergie électrique (190) par l'intermédiaire du deuxième conducteur électrique (120) ; le deuxième dispositif de transfert d'énergie inductif est relié électriquement à l'organe consommateur d'énergie électrique (190) par l'intermédiaire du premier conducteur électrique (110) et à la source d'énergie électrique (180) par l'intermédiaire du deuxième conducteur électrique (120).

8. Nacelle (900) selon l'une quelconque des revendications précédentes, dans laquelle le premier tube cylindrique comprend au moins une surface interne primaire et au moins une surface externe primaire et le deuxième tube cylindrique comprend au moins une surface interne secondaire et au moins une surface externe secondaire, dans laquelle un des tubes cylindriques parmi le premier tube cylindrique et le deuxième tube cylindrique comprend une couche d'isolant électrique sur au moins une surface parmi la surface interne primaire, la surface externe primaire, la surface interne secondaire et la surface externe secondaire.

9. Nacelle (900) selon la revendication 6, dans laquelle la capacité du circuit de connexion est compensée par une induction électrique supplémentaire.

10. Nacelle (900) selon la revendication 7, dans laquelle l'induction du circuit de connexion est compensée par une capacité électrique supplémentaire.

## Patentansprüche

1. Gondel (900) für ein Turbotriebwerk eines Luftfahrzeugs, dessen Gondel (900) eine Stromversorgungsvorrichtung umfasst, die eine Energiequelle (180) aufweist, die von einer feststehenden Struktur der Gondel (900) getragen wird und ihre Energie einem Verbraucherorgan von elektrischer Energie (190) liefert, das von einer beweglichen Abdeckung einer Schubumkehr getragen wird; wobei das Verbraucherorgan von elektrischer Energie (190) eine Einheit von bivalenten Knoten umfasst, die konfiguriert ist, um es dem Verbraucherorgan von elektrischer Energie (190) zu erlauben, die alternative elektrische Energie vollkommen oder teilweise in mechanische Energie umzuwandeln; wobei die Stromversorgungsvorrichtung weiter mindestens eine Einheit von Energieübertragungsvorrichtungen (170) umfasst, die konfiguriert ist, um eine elektrische Energiequelle (180) mit dem Verbraucherorgan von elektrischer Energie (190) zu verbinden, und dazu bestimmt ist, die elektrische Energie vollkommen oder teilweise zu dem Verbraucherorgan von elektrischer Energie (190) zu übertragen; wobei die Einheit von Energieübertragungsvorrichtungen (170) einen ersten elektrischen Leiter (110) umfasst, der konfiguriert ist, um elektrisch an die Energiequelle angeschlossen zu werden, und einen zweiten elektrischen Leiter (120), der konfiguriert ist, um elektrisch an das Verbraucherorgan von elektrischer Energie (190) angeschlossen zu werden; wobei der erste elektrische Leiter (110) eine erste zylindrische Röhre umfasst, die fest mit der beweglichen Abdeckung verbunden ist und der zweite Leiter eine zweite zylindrische Röhre umfasst, die fest mit der feststehenden Struktur der Umkehr verbunden ist, und der erste elektrische Leiter (110) und der zweite elektrische Leiter (120) konfiguriert sind, um mindestens eine elektrische Komponente aus einer kapazitiven elektrischen Komponente und/oder einer induktiven elektrischen Komponente zu bilden, und um beim Halt oder beim Verschieben der beweglichen Abdeckung im Verhältnis zur feststehenden Struktur elektrisch voneinander isoliert zu werden.

2. Gondel (900) nach Anspruch 1, wobei das Verbraucherorgan von elektrischer Energie (190) einem variablen Düsenbetätigungssystem der beweglichen Abdeckung der Schubumkehr angehört, das Verbraucherorgan von elektrischer Energie (190) vorzugsweise einen Motor dieses Betätigungssystems bildet.

3. Gondel (900) nach Anspruch 1, wobei die erste zylindrische Röhre und die zweite zylindrische Röhre konfiguriert sind, um zusammenzuwirken, und die erste zylindrische Röhre und die zweite zylindrische Röhre vorzugsweise konfiguriert sind, um im Verhältnis zueinander zu gleiten, und sie mindestens dann einander gegenüber sind, wenn die gleitende Abdeckung der Gondel (900) geschlossen ist, um so einen Trennkondensator oder einen Trenntransformator zu bilden.

4. Gondel (900) nach einem der Ansprüche 1 oder 3, wobei der erste Leiter elektrisch an die erste zylindrische Röhre angeschlossen ist, wobei der erste elektrische Leiter (110) vorzugsweise eines der Enden der ersten zylindrischen Röhre elektrisch kontaktiert.

5. Gondel (900) nach einem der Ansprüche 1 oder 3, wobei der zweite Leiter elektrisch an die zweite zylindrische Röhre angeschlossen ist, wobei der zweite elektrische Leiter (120) vorzugsweise eines der Enden der zweiten zylindrischen Röhre elektrisch kontaktiert.

6. Gondel (900) nach einem der vorstehenden Ansprüche, wobei die Stromversorgungsvorrichtung eine erste kapazitive Energieübertragungsvorrichtung und eine zweite kapazitive Energieübertragungsvorrichtung umfasst; wobei die erste kapazitive Energieübertragungsvorrichtung über den ersten elektrischen Leiter (110) elektrisch an die elektrische Energiequelle (180), und über den zweiten elektrischen Leiter (120) elektrisch an das Verbraucherorgan von elektrischer Energie (190) angeschlossen ist; wobei die zweite kapazitive Energieübertragungsvorrichtung über den ersten elektrischen Leiter (110) elektrisch an das Verbraucherorgan von elektrischer Energie (190), und über den zweiten elektrischen Leiter (120) elektrisch an die elektrische Energiequelle (180) angeschlossen ist.

7. Gondel (900) nach einem der vorstehenden Ansprüche, wobei die Stromversorgungsvorrichtung eine erste induktive Energieübertragungsvorrichtung und eine zweite induktive Energieübertragungsvorrichtung umfasst; wobei die erste induktive Energieübertragungsvorrichtung über den ersten elektrischen Leiter (110) elektrisch an die elektrische Energiequelle (180), und über den zweiten elektrischen Leiter (120) elektrisch an das Verbraucherorgan von elektrischer Energie (190) angeschlossen ist; wobei die zweite induktive Energieübertragungsvorrichtung über den ersten elektrischen Leiter (110) elektrisch an das Verbraucherorgan von elektrischer Energie (190), und über den zweiten elektrischen Leiter (120) elektrisch an die elektrische Energiequelle (180) angeschlossen ist.

8. Gondel (900) nach einem der vorstehenden Ansprüche, wobei die erste zylindrische Röhre mindestens eine primäre Innenfläche und mindestens eine primäre Außenfläche umfasst, und die zweite zylindrische Röhre mindestens eine sekundäre Innenfläche und mindestens eine sekundäre Außenfläche umfasst, wobei eine der zylindrischen Röhren aus der ersten zylindrischen Röhre und der zweiten zylindrischen Röhre eine elektrische isolierende Schicht auf mindestens einer Fläche aus der primären Innenfläche, der primären Außenfläche, der sekundären Innenfläche und der sekundären Außenfläche umfasst.

9. Gondel (900) nach Anspruch 6, wobei die Kapazität des Verbindungskreises durch eine zusätzliche elektrische Induktion kompensiert wird.

10. Gondel (900) nach Anspruch 7, wobei die Induktion des Verbindungskreises durch eine zusätzliche elektrische Kapazität kompensiert wird.

## Claims

1. A nacelle (900) for an aircraft turbojet engine whose nacelle (900) comprises a power supply device having an energy source (180) carried by a fixed structure of the nacelle (900) and providing its energy to an electrical energy-consuming member (190) carried by a movable cowl of a thrust reverser; the electrical energy-consuming member (190) comprising a set of bivalent nodes configured to allow the electrical energy-consuming member (190) to totally or partially transform the alternating electrical energy into a mechanical energy; the power supply device further comprising at least one set of energy transfer devices (170) configured to connect an electrical energy source (180) to the electrical energy-consuming member (190) and being intended to totally or partially transfer the electrical energy to the electrical energy-consuming member (190); the set of energy transfer devices (170) comprising a first electrical conductor (110) configured to be electrically connected to the energy source and a second electrical conductor (120) configured to be electrically connected to the electrical energy-consuming member (190); the first electrical conductor (110) comprising a first cylindrical tube secured to the movable cowl and the second conductor comprising a second cylindrical tube secured to the fixed structure of the thrust reverser and the first electrical conductor (110) and the second electrical conductor (120) are configured to form at least one electrical component among a capacitive electrical component and/or an inductive electrical component and to be electrically insulated relative to each other at shutdown or during the displacement of the movable cowl relative to the fixed structure.

2. The nacelle (900) according to claim 1, wherein the electrical energy-consuming member (190) belongs to a variable nozzle actuating system of the movable cowl of the thrust reverser, preferably the electrical energy-consuming member (190) forms a motor of this actuating system.

3. The nacelle (900) according to claim 1, wherein the first cylindrical tube and the second cylindrical tube are configured to cooperate and preferably the first cylindrical tube and the second cylindrical tube are configured to slide relative to each other and are facing each other at least when the sliding cowl of the nacelle (900) is closed to thereby constitute an isolating capacitor or an isolating transformer.

4. The nacelle (900) according to any of claims 1 or 3, wherein the first conductor is electrically connected to the first cylindrical tube, preferably the first electrical conductor (110) electrically contacts one of the ends of the first cylindrical tube.

5. The nacelle (900) according to any of claims 1 or 3, wherein the second conductor is electrically connected to the second cylindrical tube, preferably the second electrical conductor (120) electrically contacts one of the ends of the second cylindrical tube.

6. The nacelle (900) according to any one of the preceding claims, wherein the power supply device comprises a first capacitive energy transfer device and a second capacitive energy transfer device; the first capacitive energy transfer device being electrically connected to the electrical energy source (180) via the first electrical conductor (110) and to the electrical energy-consuming member (190) via the second electrical conductor (120); the second capacitive energy transfer device being electrically connected to the electrical energy-consuming member (190) via the first electrical conductor (110) and to the electrical energy source (180) via the second electrical conductor (120).

7. The nacelle (900) according to any one of the preceding claims, wherein the power supply device comprises a first inductive energy transfer device and a second inductive energy transfer device; the first inductive energy transfer device is electrically connected to the electrical energy source (180) via the first electrical conductor (110) and to the electrical energy-consuming member (190) via the second electrical conductor (120); the second inductive energy transfer device is electrically connected to the electrical energy-consuming member (190) via the first electrical conductor (110) and to the electrical energy source (180) via the second electrical conductor (120).

8. The nacelle (900) according to any one of the preceding claims, wherein the first cylindrical tube comprises at least one primary inner surface and at least one primary outer surface and the second cylindrical tube comprises at least one secondary inner surface and at least one secondary outer surface, wherein one of the cylindrical tubes among the first cylindrical tube and the second cylindrical tube comprises an electrical insulator layer on at least one surface among the primary inner surface, the primary outer surface, the secondary inner surface and the secondary outer surface.

9. The nacelle (900) according to claim 6, wherein the capacitance of the connection circuit is compensated by an additional electric induction.

10. The nacelle (900) according to claim 7, wherein the induction of the connection circuit is compensated by an additional electric capacitance.
